# EUROPEAN PATENT SPECIFICATION

(11) **EP 3 536 487 B1**
(45) Date of publication and mention of the grant of the patent: **14.10.2020**
(21) Application number: 19161443.7
(22) Date of filing: 07.03.2019
(51) Int. Cl.: B29C 65/08, B65B 19/22, B65B 51/22, B65D 85/10, B29K 23/00, B29K 705/02, B29L 9/00

(54) **METHOD TO PRODUCE HERMETIC WRAPPINGS AND CORRESPONDING MACHINE**
VERFAHREN ZUR HERSTELLUNG VON HERMETISCHEN UMHÜLLUNGEN UND ENTSPRECHENDE MASCHINE
PROCÉDÉ DE PRODUCTION D'EMBALLAGES HERMÉTIQUES ET MACHINE CORRESPONDANTE

(30) Priority: 07.03.2018 IT 201800003324
(43) Date of publication of application: 11.09.2019
(73) Proprietor: I.M.A. Industria Macchine Automatiche S.p.A., 40064 Ozzano Dell Emilia (Bologna) (IT)
(72) Inventor: Caporale, Antonio, 40064 Ozzano Dell'Emilia (IT)
(74) Representative: Petraz, Gilberto Luigi

(56) References cited:
- EP-A1- 1 686 060
- WO-A1-2013/088405
- WO-A1-2016/166141
- WO-A1-2017/064616
- WO-A1-2017/093486
- WO-A2-2013/088401
- WO-A2-2013/088412
- DE-A1-102015 110 387

## Description

### FIELD OF THE INVENTION

The present invention concerns a method to hermetically weld lateral flaps or fins of a wrapping wrapped around a group of articles.

The present invention also concerns a method to make a hermetic wrapping and a packaging machine which implements said methods.

In particular, the methods and the machine can be used in the field of packets for smoking articles, and are suitable - for example - to produce a hermetic "gusset" type wrapping with welded lateral fins.

### BACKGROUND OF THE INVENTION

Smoking articles are traditionally packaged in rigid or semi-rigid packets, inside which the smoking articles are wrapped in an internal wrapping, generally made of tinfoil.

Normally, a reinforcement insert is present in cooperation with the internal wrapping.

This form of wrapping represents a compromise solution between production costs and the need to keep the aromatic characteristics of the tobacco present in smoking articles unaltered.

In order to better preserve the qualities of smoking articles, the need to obtain a sealed internal wrapping is increasingly felt, that is, obtained with a sheet of material which does not allow air to pass, suitably sealed around the group of smoking articles contained therein.

The present invention concerns technical solutions and operating methods that have been the subject of patent protection. This patent protection covers solutions that, structurally and functionally, are not able to define a result suitable for the desired purpose, and in the required terms.

In particular, the international patent application WO 2016/166141, by the same Applicant, concerns a packaging machine able to produce a hermetic wrapping around a group of smoking articles.

The packaging machine described in this document comprises a first wheel provided with a plurality of pockets each intended to contain a group of smoking articles. The first wheel has the dual function of disposing a wrapping around the group of articles, after having associated with them a reinforcement insert which contains them.

Downstream of the first wheel, the packaging machine comprises a second wheel comprising a plurality of gripping members each configured to receive the aforesaid wrapping which has been partly formed in the first wheel and to perform a welding step thereon of a pair of flaps to form a first fin that defines the bottom of the wrapping, and a subsequent folding step which folds the fin against one of the walls of the wrapping.

The packaging machine described in WO 2016/166141 also comprises a plurality of folding and welding stations disposed downstream of the second wheel to form and fold the lateral fins and weld them suitably, to close the casing and obtain a hermetically sealed casing.

In each welding station two pairs of heating elements are provided, each located in correspondence with one of the longitudinal sides of the packet so that the fin to be welded is interposed between the heating elements, which are closed thereon to perform the welding.

In "gusset" type packets known in the state of the art, each lateral fin has a variable thickness because the various folding steps of the wrapping, mentioned above, cause the different portions of the fin, disposed one after the other in the longitudinal direction of development of the packet, are formed by overlapping a different number of layers of the wrapping sheet folded over one another.

For example, a typical configuration provides that each lateral fin comprises a portion formed by overlapping six layers, followed by a portion formed by overlapping two layers, in turn followed by a portion formed by overlapping four layers.

The variable thickness of the lateral fins is a factor that can create various disadvantages during the welding operation of the lateral fins.

In fact, it is evident that the optimal parameters for making a weld which guarantees to obtain an airtight packet vary as the thickness of the element to be welded varies. Said parameters comprise, for example, the pressure exerted by the heating elements on the element to be welded, and the time the pressure is applied on the element itself.

To overcome this disadvantage, in the technical solution described by WO 2016/166141, three welding stations are provided to weld the lateral fins, disposed in succession one after the other along an exit path of the packets which is parallel to the longitudinal direction of development.

The first welding station carries out a pre-welding step in which the flaps that form the lateral fin are locally joined by welding points that do not however guarantee a hermetic seal. In particular, in this pre-welding step, the flaps are joined in correspondence with the portion of smallest thickness formed only by two overlapping layers.

The second welding station is necessary to weld the flaps that form the lateral fin in correspondence with the thicker portion formed by four and/or six overlapping layers.

The third welding station is necessary to correctly weld the most critical zones. In particular, these are the zones in correspondence with which the thickness to be welded varies, that is, in the transition zones between the portions formed by a different number of layers.

It is obvious that one disadvantage of this known solution is that the welding stations occupy a rather extensive linear segment. Consequently, the packaging machine which comprises them has significant bulk.

Another disadvantage of this known solution is that it is very expensive from an energy point of view, because it is necessary to power six pairs of heating elements.

Another disadvantage is that this technical solution requires long and complicated adjustment operations when a different type of hermetic packet is to be made, which has different thicknesses of the lateral fins.

Another disadvantage is that this technical solution has a limited productivity because each of the welding operations in the different stations requires a minimum time of pressure application, which makes it impossible to decrease the time used in the welding step beyond a certain minimum threshold.

Another disadvantage is that this solution is not suitable to be used on packaging machines in which the packets to be welded are fed continuously.

Other solutions for hermetically sealing packets containing smoking articles or other types of discrete products, such as food products for example, are also known in the state of the art. Examples of these solutions are disclosed in patent applications no. WO 2017/064616, EP 1686060, DE 102015110387, WO 2017/093486, WO 2013/088401 and WO 2013/088405.

These solutions can provide to use a pair of sealing bars, or a pair of welding rollers, in which each bar or roller is rotatable around a respective axis of rotation. The bars or rollers comprised in the pair cooperate with one or the other in order to weld the closing flaps of a packet along a welding line. In particular, WO 2017/064616, EP 1686060, WO 2013/088401 and WO 2013/088405 discloses pair of sealing bars for welding or heat-sealing at least one fin or flap of a package containing objects, as for example smoking articles, whilst DE 102015110387 and WO 2017/093486 each discloses a pair of welding rollers for welding the flap or fin of one packaged to be formed. In these latter documents, one of the roller can be a sonotrode, and the other an anvil for performing an ultrasonic welding.

One disadvantage is that these solutions are also bulky and expensive.

Another disadvantage is that most of the known solutions comprise welding elements, such as bars or rollers, which are delicate members because they are provided with a member heated to a high temperature which can require frequent maintenance interventions.

Another disadvantage is that even these known solutions are not able to guarantee a hermetic seal in the case where the flaps to be welded have a variable thickness, for example because they are formed by different portions having a different thickness from each other, as in the case described above.

Another disadvantage of most of the solutions known in the state of the art as described above is that the welding elements in these known solutions comprise a member heated to a high temperature which makes the welding stations dangerous for operators, who could be injured if they accidentally enter into contact with the heated member, in particular due to the thermal inertias which cause the heated member to remain at a high temperature for a certain time even after the machine has been switched off.

There is therefore a need to perfect a method to hermetically weld a wrapping and a method to make hermetic wrappings, and a corresponding machine, which can overcome at least one of the disadvantages of the state of the art.

In particular, one purpose of the present invention is to provide a packaging machine, as well as the related and connected operative methods, for welding the lateral fins of a hermetic packet in a sealed manner, in particular for smoking articles.

Another purpose of the present invention is to provide a packaging machine, and to perfect the corresponding methods, comprising a welding station able to exert a variable pressure on the lateral fins according to the thickness thereof.

Another purpose of the present invention is to provide a packaging machine, and to perfect the corresponding methods, in which the welding station is more compact and easier to maintain than those in the state of the art.

Another purpose of the present invention is to provide a packaging machine, and to perfect the corresponding methods, in which the welding station does not cause a decrease in the productivity of the machine.

Another purpose of the present invention is to provide a packaging machine, and to perfect the corresponding methods, in which the welding station guarantees greater safety for the operators, minimizing the risk of accidents and injuries.

Another purpose of the present invention is to provide a packaging machine and to perfect the corresponding methods, which is flexible because it can be easily adjusted, easily adapting both to the format changes of the packets to be packaged, and also to wrappings having different thicknesses of the lateral fins that are to be welded.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the invention or variants to the main inventive idea.

Embodiments of the present invention concern a method to weld folded lateral fins of the gusset type of a pre-wrapping that is the precursor of a hermetic wrapping formed around an organized group of smoking articles.

According to embodiments described here, each lateral fin comprises at least two portions each having a respective thickness and formed by overlapping a different number of flaps so that the thickness of one portion is different from the thickness of the other portion.

In an exemplary embodiment, each lateral fin comprises a first portion formed by overlapping six flaps, a second portion formed by overlapping two flaps and a third portion formed by overlapping four flaps, said portions being disposed adjacent and in sequence one after the other.

According to embodiments described here, it is provided to feed the pre-wrapping in a longitudinal direction of feed, keeping the lateral fins folded so that the pre-wrapping has in succession, in the direction of feed, portions to be welded having a different thickness.

According to a characteristic aspect of the present invention, the welding of the lateral fins is an ultrasound welding, obtained by pairs of welding rollers which rotate in a manner coordinated with the feed of the pre-wrapping and which are disposed on one side and on the other of the pre-wrapping. According to embodiments provided here, the ultrasound welding is made continuously while the pre-wrapping continues to move in the direction of feed, and at least one of the welding rollers is selectively made to vibrate radially, to exert a variable pressure on the lateral fins as a function of at least the different thickness of the portions which are progressively fed in the direction of feed.

In one embodiment, it is provided to regulate the welding energy, by modifying the vibration frequency and amplitude of at least one of the welding rollers.

According to embodiments described here, the welding rollers are kept in reciprocal contact thanks to an actuator element, for example configured as a pneumatic cylinder, which allows to vary the contact pressure between the welding rollers. This advantageously allows to vary the welding pressure that the welding rollers exert on the lateral fins.

According to some embodiments, it is provided to modify the speed of feed of the pre-wrapping, when it is passing between the welding rollers, in relation to the thickness of the portion to be welded, so that the speed of feed is coordinated at least with the thickness of said portions.

In one embodiment, it should be noted that it is provided to modify the speed of feed of the pre-wrapping so that the speed of feed is inversely proportional to the thickness of said portions.

According to some embodiments, it is provided to modify the speed of feed of the pre-wrapping also as a function of other factors, such as for example the presence of folds or other defects in the lateral fins, inconsistencies in thickness between the different portions, etc.

In some embodiments, it is provided to modify the speed of rotation of the pairs of rollers as a function of the speed of feed of the pre-wrapping and/or as a function of the thickness of the portions to be welded so that the speed of rotation of the pairs of rollers is correlated to the speed of feed of the pre-wrapping, and coordinated with the thickness of said portions.

According to some embodiments, it is provided to continuously keep in contact an upper roller with a respective lower roller, said upper and lower rollers being coupled to form one of said pairs of rollers.

In a preferred embodiment, the pairs of rollers are driven independently of each other, it being provided to synchronize the functioning of the pairs of rollers so as to obtain a homogeneous welding of the two lateral fins.

In some embodiments, it is provided to make at least one of the welding rollers vibrate at a frequency of vibration comprised between 10 and 50 kHz.

According to some embodiments, it is provided to modify the speed of rotation of the rollers, even during the same welding cycle.

For example, in one version, the speed of rotation of the rollers is variable as a function of the speed of feed of the pre-wrapping, so that it is inversely proportional to the thickness of the portions to be welded.

In an alternative embodiment, it is provided to keep the speed of the rollers constant.

According to some embodiments, the rotation of the pairs of rollers determines the feed of the pre-wrapping.

Other aspects of the present invention concern a method to produce a hermetic wrapping, and the packaging machine which executes it.

In particular, the method and the machine according to the present invention can be advantageously used to make a hermetic wrapping with folded welded lateral fins of the gusset type, around an organized group of smoking articles.

In a first step, the method provides to form a pre-wrapping, which is a precursor of said hermetic wrapping, around the group of smoking articles. In one embodiment, given by way of example, the pre-wrapping is U-shaped around the smoking articles.

Subsequently, the method provides to fold a plurality of flaps comprised in the pre-wrapping to obtain two lateral fins folded in a gusset, each comprising at least two portions each having a respective thickness different from the thickness of the other portion.

After that, it is provided to move the pre-wrapping toward a welding station in a direction of feed.

In one embodiment, the direction of feed is linear and extends parallel to a longitudinal direction of extension of the hermetic wrapping in which the smoking articles are disposed.

The method to make a hermetic wrapping therefore comprises a welding step of the lateral fins, according to the welding method described above.

In one embodiment, the step which provides to fold the plurality of flaps is performed in a single folding station comprised in a transfer conveyor configured to transport the pre-wrapping, wherein the folding station is the station where the pre-wrapping exits from the transfer conveyor.

According to one aspect of the present invention, a packaging machine is provided able to make a hermetic wrapping of the gusset type, hermetically wrapped around the organized group of smoking articles.

The packaging machine according to the present invention comprises folding means configured to perform all the folding operations of the flaps comprised in a pre-wrapping that is the precursor of the hermetic wrapping to produce lateral fins folded in a gusset. In particular, each lateral fin comprises at least two portions each having a respective thickness different from the thickness of the other portion since it is formed by overlapping a different number of said flaps.

The packaging machine also comprises linear transport means configured to move the pre-wrapping toward a welding station in a direction of feed, and welding means configured to weld the lateral fins in the welding station while the pre-wrapping moves in the direction of feed.

According to a characteristic aspect of the present invention, the packaging machine comprises a first pair of welding rollers and a second pair of welding rollers to weld a respective lateral fin, each pair comprising an upper roller and a lower roller.

According to another characteristic aspect of the present invention, the packaging machine comprises vibration generating means associated with at least one of either the upper roller or the lower roller to make the roller vibrate, so that said pairs of rollers are able to exert a variable pressure on the lateral fins as a function of the different thickness of said portions.

In one embodiment, it is provided that suitable means, of a type known in the state of the art, are associated with at least one of either said upper roller or said lower roller, able to modify the frequency and/or amplitude of the vibration of the roller within a range comprised between 10 and 50 kHz.

In one embodiment, at least one actuator element is provided, configured for example as a pneumatic cylinder, which is operatively associated with at least one of either the upper roller or the lower roller, or both, to vary the contact pressure between the rollers, so as to vary consequently the welding pressure that the welding rollers exert on the lateral fins.

According to some embodiments, the transport means comprise a linear conveyor belt configured to move the pre-wrapping linearly in the direction of feed, which is parallel to a longitudinal direction of extension of the hermetic wrapping in which the smoking articles are disposed.

In one embodiment, each pair of rollers is driven by respective drive means, so that the two pairs of rollers are driven independently of each other.

Advantageously, the method and the packaging machine according to the present invention allow to seal the pre-wrapping in order to guarantee a hermetic seal, even in the case where the lateral fins are formed by a plurality of portions with different thickness.

Another advantage obtainable by means of the method and the packaging machine according to the present invention is to weld the lateral fins by exerting a pressure that is proportional to the thickness of the different portions forming the lateral fin.

This allows to seal the lateral fins with an optimal pressure thanks to which it is possible to join the flaps that form the different portions without damaging the material. Furthermore, thanks to the present invention, the lateral fins do not come into contact with high temperature members, so as to prevent them from being damaged by contact with members with an excessively high temperature.

On the contrary, in the state of the art, accidental damage to the material due to excessively high pressures and/or temperatures during welding can cause localized cracks and fissures, particularly in the transition zones between two portions of different thickness, which put the inside of the wrapping in communication with the outside, breaking its hermetic seal.

Another advantage of the method and of the packaging machine according to the present invention is that they allow to maintain a high level of productivity of the packaging machine as it is possible to reach a cycle time for the welding operation of the lateral fins which is much shorter than the time required for a welding cycle in a machine of a known type. Furthermore, advantageously, the hermetic wrapping continues to advance during the welding step, further reducing the times of this operation.

Another advantage of the method and of the machine according to the present invention is that they are very flexible because they allow to rapidly set or modify the configuration of the welding station, and the operating parameters. For example, due to the fact that it is possible to modify the contact pressure between the rollers, and/or the speed of feed of the linear transport means and/or the frequency and/or the amplitude of vibration of the rollers and their speed of rotation as a function of the thicknesses of the different portions that make up the lateral fins to be welded, it is clear that the packaging machine and the method offer great flexibility.

Another advantage of the method and of the packaging machine according to the present invention is that they do not require long and complicated set-up operations of the welding station when it is necessary to modify its configuration and/or operating parameters, for example due to the change in format of the hermetic wrapping to be produced.

Another advantage of the present invention is that it makes available a more compact packaging machine compared with similar machines known in the state of the art because the welding station has a much smaller bulk compared to those of known solutions.

Another advantage of the method and of the packaging machine according to the present invention is that they use a welding technology of the lateral fins which requires less energy to feed the welding means, resulting in consistent savings.

Another advantage of the method and of the packaging machine according to the present invention is that they offer operators greater safety because the welding station does not comprise any welding member heated to high temperatures. In fact, ultrasound welding implies that the welding members remain "cold" so that the operator is not injured due to accidental contact with the rollers when the machine is not in operation. In known solutions, it can in fact happen that the operator accidentally injures himself by touching the welding members after having switched off the machine, because they remain at high temperature for a certain period of time after shut-down due to the intrinsic thermal inertia.

Another advantage is that the method and the packaging machine according to the present invention can be used both in continuous functioning and also in step-indexed functioning, which allows them to adapt to the different operating modes required.

These and other aspects, characteristics and advantages of the present disclosure will be better understood with reference to the following description, drawings and attached claims. The drawings, which are integrated and form part of the present description, show some embodiments of the present invention, and together with the description, are intended to describe the principles of the disclosure.

The various aspects and characteristics described in the present description can be applied individually where possible. These individual aspects, for example aspects and characteristics described in the attached dependent claims, can be the object of divisional applications.

It is understood that any aspect or characteristic that is discovered, during the patenting process, to be already known, shall not be claimed and shall be the object of a disclaimer.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a schematic perspective view of a portion of a packaging machine according to some embodiments of the present invention;
- figs. 1a and 1b are perspective, schematic views, which show a sequence of successive folding operations on a pre-wrapping which can be processed by means of a packaging machine according to the present invention;
- fig. 2 is a front, partial and schematic perspective view of a welding station comprised in the packaging machine of fig. 1;
- fig. 3 is a lateral, partial and schematic elevation view of the welding station of fig. 2;
- fig. 4 is a schematic, enlarged lateral elevation view of a detail of the welding station shown in an operating condition;
- fig. 4a is an enlarged detail of fig. 4;
- fig. 5 is a perspective view of an enlarged detail comprised in the welding station of fig. 2, isolated from a rear perspective view of the station itself.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We will now refer in detail to the various embodiments of the present invention, of which one or more examples are shown in the attached drawings. Each example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall include all such modifications and variants.

Embodiments described here with reference to the drawings, concern a packaging machine 10 suitable to make a hermetic wrapping 100 for smoking articles 101. It should be noted that in the attached drawings only a portion of the packaging machine 10 is visible.

The hermetic wrapping 100 is made starting from a wrapping sheet 103, suitably shaped and pre-cut.

In one embodiment, the wrapping sheet 103 can be made of a material suitable to be heat-sealed and act as a barrier, so as to obtain a hermetic casing. For example, the material can be a polylaminated film based on a thermoplastic polymer, for example a multilayer film, with one or more barrier layers. A possible thermoplastic material can be polypropylene, for example bi-oriented (BOPP). The barrier layer can be, for example, aluminum. A possible multilayer structure can consist of BOPP/aluminum/BOPP.

The packaging machine 10 comprises a plurality of work stations in which it is provided to associate an organized group of smoking articles 101, and possibly a reinforcement insert 104, with the wrapping sheet 103, and to shape the latter around the organized group of smoking articles, so as to form a pre-wrapping 105.

In one embodiment, the pre-wrapping 105 is substantially shaped like a parallelepiped and contains inside it the organized group of smoking articles 101, and possibly the reinforcement insert 104.

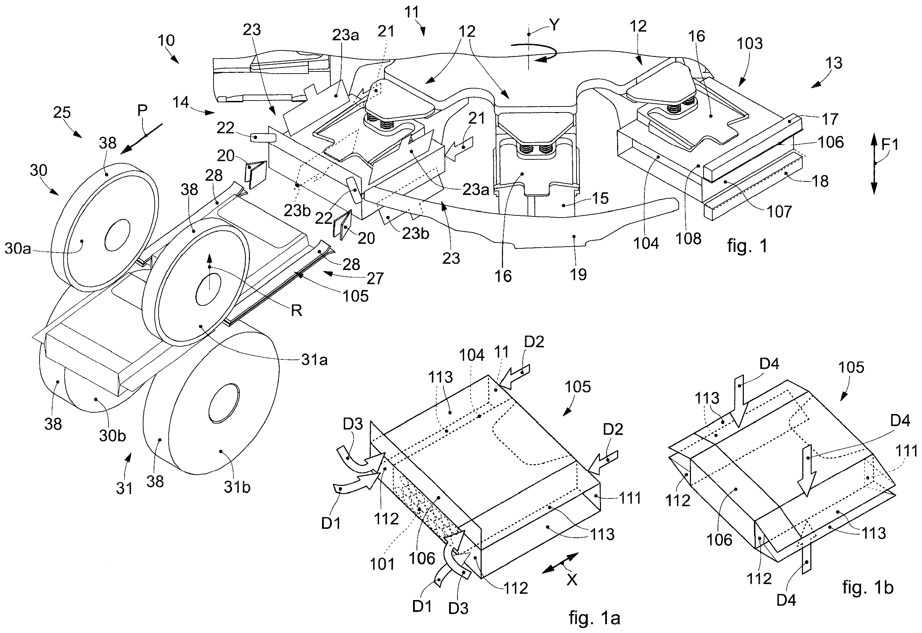

As shown in fig. 1, the packaging machine 10 comprises a wheel 11 provided with a plurality of gripping members 12 on its periphery, each intended to receive a pre-wrapping 105.

In one embodiment, the wheel 11 is disposed on a substantially horizontal plane to rotate stepwise around a vertical axis of rotation Y.

In correspondence with different predefined angular positions, a plurality of work stations are provided which are disposed between an entrance station of the pre-wrapping 105 (not shown), in which the latter is delivered to a gripping member 12, and an exit station, in correspondence with which the pre-wrapping 105 leaves the wheel 11.

According to some embodiments, in the entrance station, the pre-wrapping 105 is already wrapped in a U-shape around the group of smoking articles 101, which are possibly contained in turn - at least partly - by the reinforcement element 104.

According to some embodiments, an additional wheel (not shown) can be provided, disposed upstream of the wheel 11, configured to associate an organized group of smoking articles 101, and possibly a reinforcement insert 104, with a wrapping sheet 103, and to shape the latter in a U-shape around them. One example of a configuration of a packaging machine comprising the additional wheel is described by the international patent application WO 2016/166141.

The second wheel 11, by rotating, takes the gripping member 12 from the entrance station to a first work station 13, and subsequently to a folding station 14, which defines the exit station of the pre-wrapping 105 from the second wheel 11.

According to some embodiments, the gripping member 12 has a fixed base plane 15 and an upper plane 16 elastically pressed over the pre-wrapping 105, so as to hold the components comprised therein in position.

According to some embodiments, the first work station 13 is provided with a pair of welding devices 17, 18 of which an upper welding device 17, and a lower welding device 18, which act on the pre-wrapping 105 in order to form a transverse edge 106, also called the "bottom fin", which in fig. 1 develops below the upper welding device 17.

The upper welding device 17, in the case shown, can be fixed, whereas the lower welding device 18 can be vertically mobile, as shown by the arrow F1, between a lowered position (shown in the drawing) and a raised position (not shown), in which it is adjacent to the upper welding device 17. During the lifting movement, the lower welding device 18 vertically disposes a lower free flap 107 of the wrapping sheet 103 so as to be in contact with one end of the smoking articles 101 and overlaps an end part thereof above an upper free flap 108 to form the bottom fin 106.

In the folding station 14 all the folds of the wrapping sheet 103 are completed to make lateral fins 110 folded in a "gusset", so as to obtain a pre-wrapping 105 ready to undergo subsequent sealing operations.

According to some embodiments, between the first work station 13 and the folding station 14, a cam 29 can be provided, configured to interfere with the bottom fin 106, already welded in the first work station 13, during its transfer toward the folding station 14, and to lift it to the desired position.

In the folding station 14, a folding device is provided comprising a plurality of folding members 20, 21, 22, 23, organized in specialized pairs, each pair suitable to carry out a specific folding on the pre-wrapping 105, as explained below with reference to figs. 1a and 1b.

The folding device comprises a pair of front folders 20 and a pair of rear folders 21, configured respectively to fold the portions of the lateral flaps 112, 111 protruding laterally in a transverse direction from the reinforcement insert 104 (shown by a dashed line in figs 1a and 1b), making them adhere to the lateral walls of the latter.

In particular, the front folders 20 act on the lateral flaps 112, in the direction indicated by the arrow D1 in fig. 1a, while the rear folders 21 act on the lateral flaps 111 in the direction indicated by the arrow D2 in fig. 1a.

Advantageously, according to a possible solution, the folding device also comprises a pair of upper folders 22, configured to act as indicated by the arrows D3 in fig. 1b in order to fold the bottom fin 106 previously welded in the first work station 13 by about 180°.

The folding device also comprises two pairs of lateral folders 23, each consisting of an upper lateral folder 23a and a lower lateral folder 23b, configured to act against the longitudinal lateral flaps 113 of the wrapping sheet 103 that protrude beyond the lateral walls of the reinforcement insert 104, and to make the lateral fins or flaps 110.

The lateral folders 23 intervene subsequently with respect to the front and rear folders 20, 21 in the direction indicated by the arrows D4 and tend to take the longitudinal lateral flaps 113 according to an inclined disposition in reciprocal contact.

According to some embodiments, the upper and lower lateral folders 23a and 23b are disposed inclined and/or are suitably shaped in an angled manner.

According to some embodiments, the front folders 20 and/or the rear folders 21 advantageously have a substantially triangular shape in the zone which contributes to folding.

In one embodiment, in correspondence with the definitive folding station 14, it is provided to extract the pre-wrapping 105 thus formed from the respective gripping member 12, for example by means of an extractor member, not shown.

From the definitive folding station 14, the pre-wrapping 105 then passes to a welding station 25, by means of a linear conveyor belt 26.

The welding station 25 is configured to stabilize the connection of the lateral fins 110, also making the bottom fin 106 integral with the latter, so as to obtain the hermetic wrapping 100.

In a preferred embodiment, the pre-wrapping 105 from the folding station 14 to the welding station 25 follows a path P which is substantially linear.

In one embodiment, between the folding station 14 and the welding station 25 an intermediate guide station 27 is provided which keeps the lateral fins 110 folded in the desired position, defined by the folding station 14, and which also allows to better define the longitudinal folds that define them.

The intermediate guide station 27 comprises guide members 28 configured to move the lateral fins 110 closer to each other and also to position them adherent to the reinforcement insert 104.

According to some embodiments, the guide members 28 can comprise a slot, optionally provided in the entrance direction with a flared or spread portion, able to define a lead-in to facilitate the introduction of the lateral fins 110 of the pre-wrapping 105.

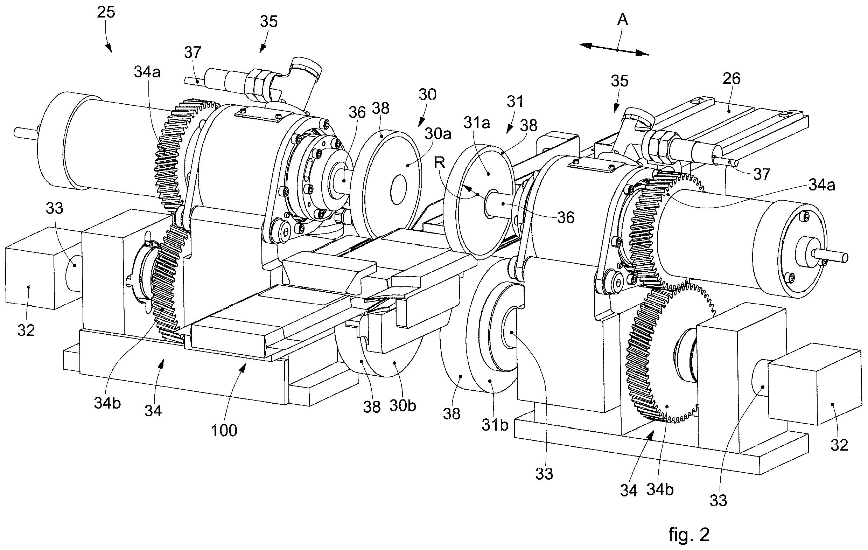

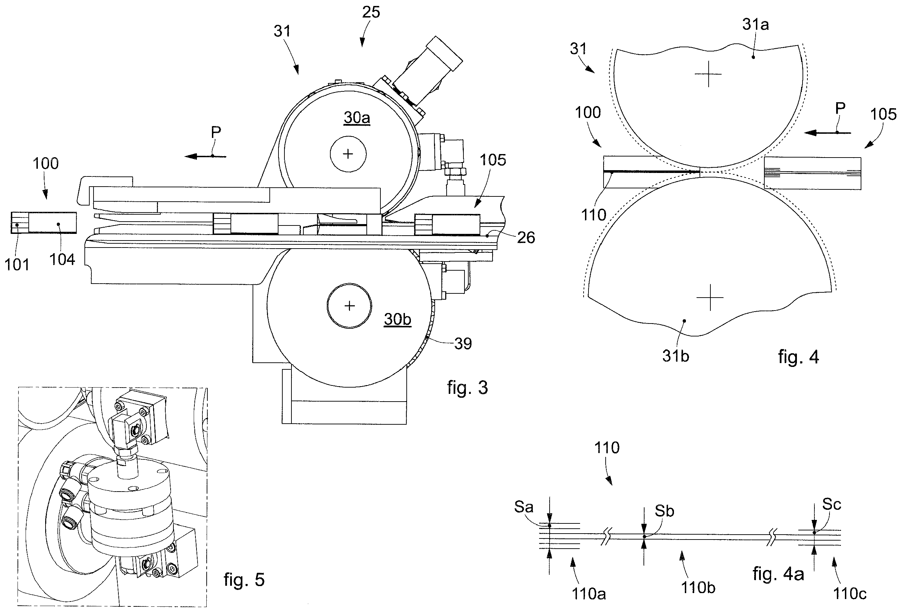

The welding station 25, better visible in figs. 2 and 3, comprises a first pair of rollers 30 and a second pair of rollers 31, each pair 30, 31 being intended to interact with a respective lateral fin 110.

Each pair of rollers 30, 31 comprises an upper roller 30a, 31a and a lower roller 30b, 31b, reciprocally cooperating to seal the respective lateral fin 110.

According to some embodiments, the welding station 25 comprises a servomotor 32 to drive the rollers.

In one embodiment, a servomotor 32 is provided for each pair of rollers 30, 31, so that the latter are driven independently of each other.

In one embodiment, the servomotor 32 is disposed coaxial with a lower shaft 33 which carries the lower roller 30b, 31b.

According to some embodiments, a motion transmission mechanism 34 is provided which transmits the rotational movement from the servomotor 32 to the upper roller 30a, 31a.

In one embodiment, the motion transmission mechanism 34 comprises a pair of toothed wheels 34a, 34b configured as cylindrical toothed wheels with helical teeth.

According to some embodiments, the welding station 25 comprises a vibration generating device 35, of a type known in the state of the art, which therefore will not be described here in detail.

In one embodiment, the vibration generating device 35 is operatively associated with the upper roller 30a, 31a and coaxial with an upper shaft 36 on which the latter are installed.

In one embodiment, the vibration generating device 35 comprises a converter member 37 configured to convert the prevailing direction of vibration from axial to radial.

In particular, the converter member 37 is able to convert the vibrations of a vibrating element which vibrates parallel to an axial direction A, into vibrations of the upper roller 30a, 31a which vibrates mainly according to a radial direction R.

In some embodiments, the vibration generating device 35 is configured to generate high frequency vibrations comprised between 10 and 50 kHz.

The upper roller 30a, 31a therefore defines a sonotrode, also called horn, able to seal the lateral fins 110 in cooperation with the lower roller 30b, 31b coupled therewith.

The rollers 30a, 31a, 30b, 31b comprise an active surface 38 defined by the lateral surface of the roller.

During use, the active surface 38 of one upper roller 30a, 31a is kept substantially always in contact with the active surface 38 of the corresponding lower roller 30b, 31b so as to transmit the vibrational movement in a radial direction also to the latter.

In one embodiment, the active surface 38, in particular of the lower rollers 30b, 31b, can comprise a plurality of alternating ridges and hollows 39, as can be seen in fig. 3. This conformation is advantageous because it facilitates the sealing process, defining cleaner welding lines that guarantee an excellent seal.

In one embodiment, the welding station 25 can comprise an adjustment mechanism 40 which allows to adjust the contact pressure of the coupled rollers so as to consequently modify the welding pressure that the pairs of rollers 30, 31 exert on the lateral fins 110.

In one embodiment, the adjustment mechanism comprises a pneumatic cylinder 40 operatively associated with both the rollers that form the pairs of rollers 30, 31, that is, both to each of the upper rollers 30a, 31a, and also to each of the lower rollers 30b, 31b.

The pneumatic cylinder 40, of the type known in the state of the art, is connected to a source of compressed air through connections 41, and is also provided with suitable connection means 42, configured to transfer the force generated by the cylinder to the rollers associated therewith.

In alternative embodiments, the adjustment mechanism 40 can be associated only with the upper rollers 30a, 31a, or only with the lower rollers 30b, 31b. According to some embodiments, the welding station comprises means to adjust the speed of rotation of the pairs of rollers 30, 31 (not shown, of a type known in the state of the art) which allow to vary the speed of the latter according to a desired law of motion.

In one version, it is provided to feed the pre-wrappings 105 in the linear direction of feed P, parallel to a longitudinal direction of extension X of the hermetic wrapping 100, continuously and with a constant feed rate, and it is also provided to rotate the pairs of rollers 30, 31 with a constant speed of rotation.

In an alternative version, it is provided to feed the pre-wrappings 105 in the linear direction of feed P in a step-indexed manner, and consequently the pairs of rollers 30, 31 rotate with a law of motion correlated with that of the pre-wrappings 105, which can typically comprise an acceleration step, a deceleration step and a stopping step.

With particular reference to figs. 4 and 4a, a pre-wrapping 105 is shown schematically (to the right of the rollers 31a, 31b) which is advancing in the direction of feed P toward the welding station 25, and a hermetic wrapping 100 (to the left of the rollers 31a, 31b) obtained by hermetically welding the lateral fins 110.

It should be noted that, in these drawings, the circular dashed lines shaped as a circumferential arc schematically indicate the profile of the rollers 31a, 31b at a given instant, because - due to the high frequency vibration of the rollers themselves - their profile moves over time.

In these drawings, the thicknesses of the different portions that make up the lateral fins have been shown considerably enlarged, with the flaps exaggeratedly distanced from each other, to facilitate understanding. It is obvious that, in a real scale representation, the different thicknesses of the different portions would not be substantially visible to the naked eye.

Each lateral fin 110 comprises a first portion 110a having a first thickness Sa, a second portion 110b having a second thickness Sb, and a third portion 110c having a third thickness Sc. The first portion 110a, the second portion 110b and the third portion 110c are disposed adjacent to each other and in sequence one after the other.

In the embodiment shown, the first thickness Sa is the maximum thickness of the lateral fin 110, the second thickness Sb is the minimum thickness of the lateral fin 110, and the third thickness Sc is an intermediate thickness bigger than the second thickness Sb and smaller than the first thickness Sa.

With reference to the previous description of figs. 1a and 1b, the second portion 110b is formed by overlapping two layers, that is, by overlapping the two lateral flaps 113.

The first portion 110a and the second portion 110b are formed respectively by overlapping six layers and four layers.

Both portions 110a, 110b are formed by overlapping the same four layers, as will be explained below. In addition, the first portion 110a comprises two more layers, that is, the lower and upper free flaps 107, 108 joined together to form the bottom fin 106.

The overlapping of the four layers is obtained thanks to the action of the front and rear folders 20, 21 which, by folding the lateral flaps 111, 112 respectively against the reinforcement insert 104, cause a portion of the flaps 111, 112 to overlap a respective longitudinal lateral flap 113, thus obtaining a zone formed by overlapping four layers, associated two by two.

It is clear that modifications and/or additions of parts can be made to the method and machine as described heretofore, without departing from the field and scope of the present invention.

It is also clear that, although the present invention has been described with reference to some specific examples, a person of skill in the art shall certainly be able to achieve many other equivalent forms of method and machine, having the characteristics as set forth in the claims and hence all coming within the field of protection defined thereby.

In the following claims, the sole purpose of the references in brackets is to facilitate reading: they must not be considered as restrictive factors with regard to the field of protection claimed in the specific claims.

## Claims

1. Method to weld folded lateral fins (110) of the gusset type of a pre-wrapping (105) that is the precursor of a hermetic wrapping (100) formed around an organized group of smoking articles (101), each of said lateral fins (110) comprising at least two portions (110a, 110b, 110c) each having a respective thickness (Sa, Sb, Sc) and formed by overlapping a different number of said flaps (107, 108, 111, 112, 113) so that the thickness of one portion (110a, 110b, 110c) is different from the thickness (Sa, Sb, Sc) of the other portion (110a, 110b, 110c), said pre-wrapping (105) advancing in a longitudinal direction of feed (P), keeping said lateral fins (110) of said pre-wrapping (105) folded, so that said pre-wrapping (105) has in succession, in said direction of feed (P), portions (110a, 110b, 110c) to be welded having a different thickness (Sa, Sb, Sc), **characterized in that** the welding of the lateral fins (110) is an ultrasound welding, obtained by means of pairs of welding rollers (30, 31) that rotate in coordination with the feed of said pre-wrapping (105) and that are disposed on one side and the other of said pre-wrapping (105), wherein said ultrasound welding is performed continuously while said pre-wrapping (105) continues to move in said direction of feed (P), wherein at least one of said welding rollers (30a, 31a, 30b, 31b) is selectively made to vibrate radially so as to exert, on said lateral fins (110), a variable pressure as a function at least of the different thickness (Sa, Sb, Sc) of the portions (110a, 110b, 110c) that are progressively fed in said direction of feed (P).

2. Method as in claim 1, **characterized in that** it provides to adjust the contact pressure between said welding rollers (30a, 31a, 30b, 31b) so as to adjust the welding pressure exerted by said pair of rollers (30, 31) on said lateral fins (110).

3. Method as in claim 1 or 2, **characterized in that** it provides to modify the frequency and/or amplitude of vibration of at least one of said welding rollers (30a, 31a, 30b, 31b).

4. Method as in the previous claims, **characterized in that** it provides to modify the speed of feed of said pre-wrapping (105) when the latter is passing between said welding rollers (30a, 31a, 30b, 31b) in relation to the thickness (Sa, Sb, Sc) of the portion (110a, 110b, 110c) to be welded, so that the speed of feed is coordinated at least with the thickness (Sa, Sb, Sc) of said portions (110a, 110b, 110c).

5. Method as in claim 4, **characterized in that** it provides to modify the speed of feed of said pre-wrapping (105) so that the speed of feed is inversely proportional to the thickness (Sa, Sb, Sc) of said portions (110a, 110b, 110c).

6. Method as in any claim hereinbefore, **characterized in that** it provides to modify the speed of rotation of said pairs of rollers (30, 31) as a function of the speed of feed of said pre-wrapping (105) and/or as a function of the thickness (Sa, Sb, Sc) of said portions (110a, 110b, 110c) to be welded, so that the speed of rotation of said pairs of rollers (30, 31) is correlated to the speed of feed of said pre-wrapping (105), and coordinated with the thickness (Sa, Sb, Sc) of said portions (110a, 110b, 110c).

7. Method as in any claim hereinbefore, **characterized in that** during the rotation of said pairs of rollers (30, 31) it is provided to keep an upper roller (30a, 31a) continuously in contact with a respective lower roller (30b, 31b), said upper and lower rollers being coupled so as to form a pair of rollers (30, 31).

8. Method as in any claim hereinbefore, **characterized in that** said pairs of rollers (30, 31) are driven independently of each other, it being provided to synchronize the functioning of said pairs of rollers (30, 31) so as to obtain a homogeneous welding of said lateral fins (110).

9. Method as in any claim hereinbefore, **characterized in that** during welding it is provided to make at least one of said welding rollers (30b, 31b) vibrate at a frequency comprised between 10 and 50 kHz.

10. Method as in any claim hereinbefore, **characterized in that** it is provided to drive in rotation only one of the welding rollers (30b, 31b) comprised in said pairs of rollers (30, 31) by drive means (42), and to transmit the rotation to the other of said rollers (30a, 31a) by means of motion transmission means (34).

11. Method as in any claim hereinbefore, **characterized in that** the rotation of said pairs of rollers (30, 31) determines the feed of said pre-wrapping (105).

12. Method as in any claim hereinbefore, **characterized in that** said portions (110a, 110b, 110c) comprise a first portion (110a) with a maximum thickness (Sa), a second portion (110b) with minimum thickness (Sb), and a third portion (110c) with an intermediate thickness (Sc) between said maximum thickness (Sa) and said minimum thickness (Sb), said first, second and third portions (110a, 110b, 110c) being disposed adjacent and in sequence one after the other.

13. Method to make a hermetic wrapping (100) with folded welded lateral fins of the gusset type, around an organized group of smoking articles (101), said method comprising the steps of:
- forming a pre-wrapping (105) that is the precursor of said hermetic wrapping (100) around said organized group of smoking articles (101),
- folding a plurality of flaps (107, 108, 111, 112, 113) comprised in said pre-wrapping (105) in order to make two lateral fins (110) folded in a gusset, each of said lateral fins (110) comprising at least two portions (110a, 110b, 110c) each having a respective thickness (Sa, Sb, Sc) and formed by overlapping a different number of said flaps (107, 108, 111, 112, 113) so that the thickness of one portion (110a, 110b, 110c) is different from the thickness (Sa, Sb, Sc) of the other portion (110a, 110b, 110c),
- moving said pre-wrapping (105) toward a welding station (25) in a longitudinal direction of feed (P), keeping said lateral fins (110) of said pre-wrapping (105) folded, so that said pre-wrapping (105) has in succession, in said direction of feed (P), portions (110a, 110b, 110c) to be welded having a different thickness (Sa, Sb, Sc),
- welding said lateral fins (110) in said welding station (25), according to a method as in any claim hereinbefore.

14. Method as in claim 13, **characterized in that** the folding of said plurality of flaps (107, 108, 111, 112, 113) is performed in a single folding station (14) comprised in a transfer conveyor (11) configured to transport said pre-wrapping (105), said folding station (14) being the exit station of said pre-wrapping (105) from said transfer conveyor (11), said direction of feed (P) departing radially from said transfer conveyor (11).

15. Packaging machine to make a hermetic wrapping (100) of the gusset type, wrapped hermetically around an organized group of smoking articles (101), comprising:
- folding means (20, 21, 22, 23) configured to perform all the operations of folding flaps (107, 108, 111, 112, 113) comprised in a pre-wrapping (105) that is the precursor of said hermetic wrapping (100) so as to make two lateral fins (110) folded in a gusset, each of said lateral fins (110) comprising at least two portions (110a, 110b, 110c) each having a respective thickness (Sa, Sb, Sc) and formed by overlapping a different number of said flaps (107, 108, 111, 112, 113) so that the thickness of one portion (110a, 110b, 110c) is different from the thickness (Sa, Sb, Sc) of the other portion (110a, 110b, 110c),
- linear transport means (26) configured to move said pre-wrapping (105) toward a welding station (25) in a direction of feed (P),
- welding means (30, 31) configured to weld said lateral fins (110) in said welding station (25) while said pre-wrapping (105) is moving in said direction of feed (P),
said machine being **characterized in that** said welding means comprise a first pair of welding rollers (30) and a second pair of welding rollers (31) disposed on one side and the other with respect to said pre-wrapping (105) in order to weld a respective lateral fin (110), each of said pairs of welding rollers (30, 31) comprising an upper roller (30a, 31a) and a lower roller (30b, 31b) cooperating with each other in order to weld a respective lateral fin (110), **and in that** it also comprises vibration generating means (35) associated with at least one of either said upper roller (30a, 31a) or said lower roller (30b, 31b) in order to make said roller (30a, 31a, 30b, 31b) vibrate radially, so that said pairs of welding rollers (30, 31) are able to exert, on said lateral fins (110), a variable pressure as a function of the different thickness (Sa, Sb, Sc) of said portions (110a, 110b, 110c).

16. Machine as in claim 15, **characterized in that** an adjustment mechanism (40) is associated with at least one of either said upper roller (30a, 31a) or said lower roller (30b, 31b), which allows to modify the contact pressure between said welding rollers (30a, 31a, 30b, 31b).

17. Machine as in claim 15 or 16, **characterized in that** said linear transport means (26) comprise a conveyor belt configured to move said pre-wrapping (105) linearly in said direction of feed (P) which is parallel to a longitudinal direction of extension (X) of said hermetic wrapping (100) in which said smoking articles (101) are disposed.

18. Machine as in any claim from 15 to 17, **characterized in that** said pairs of welding rollers (30, 31) comprise an active surface (38) configured to interact with said lateral fins (110), said active surface (38) comprising a plurality of ridges and hollows (39) alternating with each other.

## Patentansprüche

1. Verfahren zum Verschweißen gefalteter Seitenrippen (110) des Seitenfaltentyps einer Vorverpackung (105), welche die Vorstufe einer hermetischen Verpackung (100) ist, die um eine geordnete Gruppe von Rauchartikeln (101) gebildet ist, wobei jede der Seitenrippen (110) mindestens zwei Abschnitte (110a, 110b, 110c) aufweist, die jeweils eine entsprechende Dicke (Sa, Sb, Sc) aufweisen und durch Überlappen einer unterschiedlichen Anzahl von Laschen (107, 108, 111, 112, 113) gebildet sind, so dass die Dicke eines der Abschnitte (110a, 110b, 110c) sich von der Dicke (Sa, Sb, Sc) eines anderen der Abschnitte (110a, 110b, 110c) unterscheidet, wobei sich die Vorverpackung (105) in einer Längsvorschubrichtung (P) vorwärts bewegt, wobei die Seitenrippen (110) der Vorverpackung (105) gefaltet bleiben, so dass die Vorverpackung (105) in Vorschubrichtung (P) nacheinander zu verschweißende Abschnitte (110a, 110b, 110c) mit einer unterschiedlichen Dicke (Sa, Sb, Sc) aufweist,
**dadurch gekennzeichnet, dass**
das Schweißen der Seitenrippen (110) ein Ultraschallschweißen ist, das mittels Schweißrollenpaaren (30, 31) erfolgt, die in Abstimmung mit dem Vorschub der Vorverpackung (105) rotieren und die auf der einen und der anderen Seite der Vorverpackung (105) angeordnet sind, wobei das Ultraschallschweißen kontinuierlich durchgeführt wird, während sich die Vorverpackung (105) weiter in Vorschubrichtung (P) bewegt, wobei mindestens eine der Schweißrollen (30a, 31a, 30b, 31b) selektiv in radiale Vibration versetzt wird, sodass auf die Seitenrippen (110) ein variabler Druck in Abhängigkeit zumindest von der unterschiedlichen Dicke (Sa, Sb, Sc) der Abschnitte (110a, 110b, 110c) ausgeübt wird, die in Vorschubrichtung (P) progressiv zugeführt werden.

2. Verfahren nach Anspruch 1,
**dadurch gekennzeichnet, dass** es vorsieht, dass der Kontaktdruck zwischen den Schweißrollen (30a, 31a, 30b, 31b) so eingestellt wird, dass der von dem Rollenpaar (30, 31) auf die Seitenrippen (110) ausgeübte Schweißdruck eingestellt wird.

3. Verfahren nach Anspruch 1 oder 2,
**dadurch gekennzeichnet, dass** es vorsieht, dass die Frequenz und/oder Amplitude der Vibration von mindestens einer der Schweißrollen (30a, 31a, 30b, 31b) angepasst wird.

4. Verfahren nach den vorhergehenden Ansprüchen,
**dadurch gekennzeichnet, dass** es vorsieht, dass die Vorschubgeschwindigkeit der Vorverpackung (105) angepasst wird, wenn diese zwischen den Schweißrollen (30a, 31a, 30b, 31b) in Bezug auf die Dicke (Sa, Sb, Sc) des zu schweißenden Abschnitts (110a, 110b, 110c) passiert derart, dass die Vorschubgeschwindigkeit zumindest mit der Dicke (Sa, Sb, Sc) der Abschnitte (110a, 110b, 110c) abgestimmt ist.

5. Verfahren nach Anspruch 4,
**dadurch gekennzeichnet, dass** es vorsieht, dass die Vorschubgeschwindigkeit der Vorverpackung (105) so angepasst wird, dass die Vorschubgeschwindigkeit umgekehrt proportional zur Dicke (Sa, Sb, Sc) der Abschnitte (110a, 110b, 110c) ist.

6. Verfahren nach einem der vorhergehenden Ansprüche,
**dadurch gekennzeichnet, dass** es vorsieht, dass die Rotationsgeschwindigkeit der Rollenpaare (30, 31) in Abhängigkeit von der Vorschubgeschwindigkeit der Vorverpackung (105) und/oder in Abhängigkeit von der Dicke (Sa, Sb, Sc) der zu verschweißenden Abschnitte (110a, 110b, 110c) angepasst wird, so dass die Rotationsgeschwindigkeit der Rollenpaare (30, 31) mit der Vorschubgeschwindigkeit der Vorverpackung (105) korreliert und mit der Dicke (Sa, Sb, Sc) der Abschnitte (110a, 110b, 110c) abgestimmt ist.

7. Verfahren nach einem der vorhergehenden Ansprüche,
**dadurch gekennzeichnet, dass** während der Rotation der Rollenpaare (30, 31) vorgesehen ist, eine obere Rolle (30a, 31a) kontinuierlich in Kontakt mit einer entsprechenden unteren Rolle (30b, 31b) zu halten, wobei die obere und die untere Rolle so gekoppelt sind, dass sie ein Rollenpaar (30, 31) bilden.

8. Verfahren nach einem der vorhergehenden Ansprüche,
**dadurch gekennzeichnet, dass** die Rollenpaare (30, 31) unabhängig voneinander angetrieben werden, wobei es vorgesehen ist, die Funktionsweise der Rollenpaare (30, 31) zu synchronisieren, um ein homogenes Verschweißen der Seitenrippen (110) zu erhalten.

9. Verfahren nach einem der vorhergehenden Ansprüche,
**dadurch gekennzeichnet, dass** während des Schweißens vorgesehen ist, mindestens eine der Schweißrollen (30b, 31b) mit einer Frequenz zwischen 10 und 50 kHz in Vibration zu versetzen.

10. Verfahren nach einem der vorhergehenden Ansprüche,
**dadurch gekennzeichnet, dass** es vorsieht, dass nur eine der in den Rollenpaaren (30, 31) enthaltenen Schweißrollen (30b, 31b) durch Antriebsmittel (42) in Rotation versetzt wird und die Rotation auf die andere der Rollen (30a, 31a) durch Bewegungsübertragungsmittel (34) übertragen wird.

11. Verfahren nach einem der vorhergehenden Ansprüche,
**dadurch gekennzeichnet, dass** die Rotation der Rollenpaare (30, 31) den Vorschub der Vorverpackung (105) bestimmt.

12. Verfahren nach einem der vorhergehenden Ansprüche,
**dadurch gekennzeichnet, dass** die Abschnitte (110a, 110b, 110c) einen ersten Abschnitt (110a) mit einer maximalen Dicke (Sa), einen zweiten Abschnitt (110b) mit einer minimalen Dicke (Sb) und einen dritten Abschnitt (110c) mit einer Zwischendicke (Sc) zwischen der maximalen Dicke (Sa) und der minimalen Dicke (Sb) umfassen, wobei der erste, zweite und dritte Abschnitt (110a, 110b, 110c) nebeneinander und in Folge hintereinander angeordnet sind.

13. Verfahren zur Herstellung einer hermetischen Verpackung (100) mit gefalteten verschweißten Seitenrippen eines Seitenfaltentyps um eine geordnete Gruppe von Rauchartikeln (101), wobei das Verfahren folgende Schritte umfasst:
- Bilden einer Vorverpackung (105), welche die Vorstufe der hermetischen Verpackung (100) um die geordnete Gruppe von Rauchartikeln (101) ist;
- Falten einer Vielzahl von Laschen (107, 108, 111, 112, 113), die in der Vorverpackung (105) enthalten sind, um zwei Seitenrippen (110) zu bilden, die als Seitenfalten gefaltet werden, wobei jede der Seitenrippen (110) mindestens zwei Abschnitte (110a, 110b, 110c) umfasst, die jeweils eine entsprechende Dicke (Sa, Sb, Sc) aufweisen und durch Überlappen einer unterschiedlichen Anzahl der Laschen (107, 108, 111, 112, 113) gebildet werden, so dass die Dicke eines der Abschnitte (110a, 110b, 110c) sich von der Dicke (Sa, Sb, Sc) des anderen der Abschnitte (110a, 110b, 110c) unterscheidet;
- Bewegen der Vorverpackung (105) zu einer Schweißstation (25) in einer Längsvorschubrichtung (P), wobei die Seitenrippen (110) der Vorverpackung (105) gefaltet bleiben, so dass die Vorverpackung (105) in Vorschubrichtung (P) nacheinander zu verschweißende Abschnitte (110a, 1101), 110c) mit einer unterschiedlichen Dicke (Sa, Sb, Sc) aufweist,
- Schweißen der Seitenrippen (110) in der Schweißstation (25) gemäß einem Verfahren nach einem der vorhergehenden Ansprüche.

14. Verfahren nach Anspruch 13,
**dadurch gekennzeichnet, dass** das Falten der Vielzahl von Klappen (107, 108, 111, 112, 113) in einer einzigen Faltstation (14) durchgeführt wird, die in einem Transferförderer (11) enthalten ist, der dazu ausgebildet ist, die Vorverpackung (105) zu transportieren, wobei die Faltstation (14) die Austrittsstation der Vorverpackung (105) aus dem Transferförderer (11) ist, wobei die Vorschubrichtung (P) radial von dem Transferförderer (11) abgeht.

15. Verpackungsmaschine zur Herstellung einer hermetischen Verpackung (100) eines Seitenfaltentyps, die eine geordnete Gruppe von Rauchartikeln (101) einhüllt, wobei die Verpackungsmaschine Folgendes umfasst:
- Faltmittel (20, 21, 22, 23), die dazu ausgebildet sind, alle Operationen zum Falten von Laschen (107, 108, 111, 112, 113) durchzuführen, die in einer Vorverpackung (105) enthalten sind, welche die Vorstufe der hermetischen Verpackung (100) ist, um zwei Seitenrippen (110) auszubilden, die als Seitenfalten gefaltet werden, wobei jede der Seitenrippen (110) mindestens zwei Abschnitte (110a, 110b, 110c) aufweist, die jeweils eine entsprechende Dicke (Sa, Sb, Sc) aufweisen und durch Überlappen einer unterschiedlichen Anzahl der Laschen (107, 108, 111, 112, 113) gebildet sind, so dass die Dicke eines der Abschnitte (110a, 110b, 110c) sich von der Dicke (Sa, Sb, Sc) des anderen der Abschnitte (110a, 110b, 110c) unterscheidet;
- Lineartransportmittel (26), die dazu ausgebildet sind, die Vorverpackung (105) zu einer Schweißstation (25) in einer Vorschubrichtung (P) zu bewegen;
- Schweißmittel (30, 31), die dazu ausgebildet sind, die Seitenrippen (110) in der Schweißstation (25) zu verschweißen, während sich die Vorverpackung (105) in Vorschubrichtung (P) bewegt,
wobei die Maschine **dadurch gekennzeichnet ist, dass** die Schweißmittel ein erstes Schweißrollenpaar (30) und ein zweites Schweißrollenpaar (31) aufweisen, die auf der einen und der anderen Seite in Bezug auf die Vorverpackung (105) angeordnet sind, um eine jeweilige Seitenrippe (110) zu verschweißen, wobei jedes der Schweißrollenpaare (30, 31) eine obere Rolle (30a, 31a) und eine untere Rolle (30b, 31b) umfasst, die miteinander zusammenwirken, um eine jeweilige Seitenrippe (110) zu verschweißen, und **dass** sie außerdem Mittel (35) zur Vibrationserzeugung aufweist, die mit mindestens einer der oberen Rollen (30a, 31a) oder der unteren Rollen (30b, 31b) verbunden sind, um die Rolle (30a, 31a, 30b, 31b) in radiale Vibration zu versetzen, so dass die Rollenpaare (30, 31) in der Lage sind, auf die Seitenrippen (110) einen variablen Druck in Abhängigkeit von der unterschiedlichen Dicke (Sa, Sb, Sc) der Abschnitte (110a, 110b, 110c) auszuüben.

16. Maschine nach Anspruch 15,
**dadurch gekennzeichnet, dass** ein Einstellmechanismus (40) mit mindestens einer der beiden oberen Rollen (30a, 31a) oder der unteren Rollen (30b, 31b), verbunden ist, der eine Anpassung des Kontaktdrucks zwischen Schweißrollen (30a, 31a, 30b, 31b) ermöglicht.

17. Maschine nach Anspruch 15 oder 16,
**dadurch gekennzeichnet, dass** die Lineartransportmittel (26) ein Förderband aufweisen, das dazu ausgebildet ist, die Vorverpackung (105) linear in Vorschubrichtung (P) zu bewegen, die parallel zu einer Längserstreckungsrichtung (X) der hermetischen Verpackung (100) ist, in der die Rauchartikel (101) angeordnet sind.

18. Maschine nach einem der Ansprüche 15 bis 17,
**dadurch gekennzeichnet, dass** die Rollenpaare (30, 31) eine aktive Oberfläche (38) umfassen, die so gestaltet ist, dass sie mit den Seitenrippen (110) zusammenwirkt, wobei die aktive Oberfläche (38) eine Vielzahl von Graten und Vertiefungen (39) umfasst, die sich miteinander abwechseln.

## Revendications

1. Procédé pour souder des ailettes latérales pliées (110) du type gousset d'un pré-emballage (105) qui est le précurseur d'un emballage hermétique (100) formé autour d'un groupe organisé d'articles à fumer (101), chacune desdites ailettes latérales (110) comprenant au moins deux parties (110a, 110b, 110c) ayant chacune une épaisseur respective (Sa, Sb, Sc) et formées en mettant en chevauchement un nombre différent desdits volets (107, 108, 111, 112, 113) de sorte que l'épaisseur d'une première partie (110a, 110b, 110c) est différente de l'épaisseur (Sa, Sb, Sc) de l'autre partie (110a, 110b, 110c), ledit pré-emballage (105) avançant dans une direction longitudinale d'alimentation (P), en maintenant lesdites ailettes latérales (110) dudit pré-emballage (105) pliées, de sorte que ledit pré-emballage (105) présente successivement, dans ladite direction d'alimentation (P), des parties (110a, 110b, 110c) à souder ayant une épaisseur différente (Sa, Sb, Sc), **caractérisé en ce que** le soudage des ailettes latérales (110) est un soudage par ultrasons, obtenu au moyen de paires de rouleaux de soudage (30, 31) qui tournent en coordination avec l'alimentation dudit pré-emballage (105) et qui sont disposés d'un côté et de l'autre dudit pré-emballage (105), dans lequel ledit soudage par ultrasons est effectué en continu pendant que ledit pré-emballage (105) continue de se déplacer dans ladite direction d'alimentation (P), dans lequel au moins un desdits rouleaux de soudage (30a, 31a, 30b, 31b) est sélectivement mis en vibration radialement de manière à exercer, sur lesdites ailettes latérales (110), une pression variable en fonction au moins de l'épaisseur différente (Sa, Sb, Sc) des parties (110a, 110b, 110c) qui sont alimentées progressivement dans ladite direction d'alimentation (P).

2. Procédé selon la revendication 1, **caractérisé en ce qu'**il prévoit d'ajuster la pression de contact entre lesdits rouleaux de soudage (30a, 31a, 30b, 31b) de manière à ajuster la pression de soudage exercée par ladite paire de rouleaux (30, 31) sur lesdites ailettes latérales (110).

3. Procédé selon la revendication 1 ou 2, **caractérisé en ce qu'**il prévoit de modifier la fréquence et/ou l'amplitude de vibrations d'au moins un desdits rouleaux de soudage (30a, 31a, 30b, 31b).

4. Procédé selon les revendications précédentes, **caractérisé en ce qu'**il prévoit de modifier la vitesse d'alimentation dudit pré-emballage (105) lorsque celui-ci passe entre lesdits rouleaux de soudage (30a, 31a, 30b, 31b) par rapport à l'épaisseur (Sa, Sb, Sc) de la partie (110a, 110b, 110c) à souder, de sorte que la vitesse d'alimentation est coordonnée au moins avec l'épaisseur (Sa, Sb, Sc) desdites parties (110a, 110b, 110c).

5. Procédé selon la revendication 4, **caractérisé en ce qu'**il prévoit de modifier la vitesse d'alimentation dudit pré-emballage (105) de sorte que la vitesse d'alimentation soit inversement proportionnelle à l'épaisseur (Sa, Sb, Sc) desdites parties (110a, 110b, 110c).

6. Procédé selon l'une quelconque des revendications précédentes, **caractérisé en ce qu'**il prévoit de modifier la vitesse de rotation desdites paires de rouleaux (30, 31) en fonction de la vitesse d'alimentation dudit pré-emballage (105) et/ou en fonction de l'épaisseur (Sa, Sb, Sc) desdites parties (110a, 110b, 110c) à souder, de sorte que la vitesse de rotation desdites paires de rouleaux (30, 31) est corrélée à la vitesse d'alimentation dudit pré-emballage (105), et coordonnée avec l'épaisseur (Sa, Sb, Sc) desdites parties (110a, 110b, 110c).

7. Procédé selon l'une quelconque des revendications précédentes, **caractérisé en ce que** pendant la rotation desdites paires de rouleaux (30, 31), il est prévu de maintenir un rouleau supérieur (30a, 31a) en contact continu avec un rouleau inférieur respectif (30b, 31b), lesdits rouleaux supérieur et inférieur étant couplés de manière à former une paire de rouleaux (30, 31).

8. Procédé selon l'une quelconque des revendications précédentes, **caractérisé en ce que** lesdites paires de rouleaux (30, 31) sont entraînées indépendamment les unes des autres, étant prévu de synchroniser le fonctionnement desdites paires de rouleaux (30, 31) de manière à obtenir un soudage homogène desdites ailettes latérales (110).

9. Procédé selon l'une quelconque des revendications précédentes, **caractérisé en ce que** lors du soudage, il est prévu d'amener au moins l'un desdits rouleaux de soudage (30b, 31b) à vibrer à une fréquence comprise entre 10 et 50 kHz.

10. Procédé selon l'une quelconque des revendications précédentes, **caractérisé en ce qu'**il est prévu d'entraîner en rotation un seul des rouleaux de soudage (30b, 31b) compris dans lesdites paires de rouleaux (30, 31) par des moyens d'entraînement (42), et de transmettre la rotation à l'autre desdits rouleaux (30a, 31a) via des moyens de transmission de mouvement (34).

11. Procédé selon l'une quelconque des revendications précédentes, **caractérisé en ce que** la rotation desdites paires de rouleaux (30, 31) détermine l'alimentation dudit pré-emballage (105).

12. Procédé selon l'une quelconque des revendications précédentes, **caractérisé en ce que** lesdites parties (110a, 110b, 110c) comprennent une première partie (110a) avec une épaisseur maximum (Sa), une deuxième partie (110b) avec une épaisseur minimum (Sb), et une troisième partie (110c) avec une épaisseur intermédiaire (Sc) entre ladite épaisseur maximum (Sa) et ladite épaisseur minimum (Sb), lesdites première, deuxième et troisième parties (110a, 110b, 110c) étant disposées adjacentes et à la suite les unes des autres.

13. Procédé de réalisation d'un emballage hermétique (100) à ailettes latérales pliées soudées du type gousset, autour d'un groupe organisé d'articles à fumer (101), ledit procédé comprenant les étapes consistant à :
- former un pré-emballage (105) qui est le précurseur dudit emballage hermétique (100) autour dudit groupe organisé d'articles à fumer (101),
- plier une pluralité de volets (107, 108, 111, 112, 113) compris dans ledit pré-emballage (105) pour réaliser deux ailettes latérales (110) pliées en un gousset, chacune desdites ailettes latérales (110) comprenant au moins deux parties (110a, 110b, 110c) ayant chacune une épaisseur respective (Sa, Sb, Sc) et formées en mettant en chevauchement un nombre différent desdits volets (107, 108, 111, 112, 113) de sorte que l'épaisseur d'une première partie (110a, 110b, 110c) est différente de l'épaisseur (Sa, Sb, Sc) de l'autre partie (110a, 110b, 110c),
- déplacer ledit pré-emballage (105) vers un poste de soudage (25) dans une direction d'alimentation longitudinale (P), en maintenant lesdites ailettes latérales (110) dudit pré-emballage (105) pliées, de sorte que ledit pré-emballage (105) présente successivement, dans ladite direction d'alimentation (P), des parties (110a, 110b, 110c) à souder ayant une épaisseur différente (Sa, Sb, Sc),
- souder lesdites ailettes latérales (110) dans ledit poste de soudage (25), selon un procédé selon l'une quelconque des revendications précédentes.

14. Procédé selon la revendication 13, **caractérisé en ce que** le pliage de ladite pluralité de volets (107, 108, 111, 112, 113) est réalisé dans un poste de pliage unique (14) compris dans un convoyeur de transfert (11) configuré pour transporter ledit pré-emballage (105), ledit poste de pliage (14) étant le poste de sortie dudit pré-emballage (105) à partir dudit convoyeur de transfert (11), ladite direction d'alimentation (P) partant radialement dudit convoyeur de transfert (11).

15. Machine d'emballage pour fabriquer un emballage hermétique (100) du type gousset, emballé hermétiquement autour d'un groupe organisé d'articles à fumer (101), comprenant :
- des moyens de pliage (20, 21, 22, 23) configurés pour effectuer toutes les opérations de pliage de volets (107, 108, 111, 112, 113) compris dans un pré-emballage (105) qui est le précurseur dudit emballage hermétique (100) de manière à réaliser deux ailettes latérales (110) pliées en un gousset, chacune desdites ailettes latérales (110) comprenant au moins deux parties (110a, 110b, 110c) ayant chacune une épaisseur respective (Sa, Sb, Sc) et formées en mettant en chevauchement un nombre différent desdits volets (107, 108, 111, 112, 113) de sorte que l'épaisseur d'une première partie (110a, 110b, 110c) est différente de l'épaisseur (Sa, Sb, Sc) de l'autre partie (110a, 110b, 110c),
- des moyens de transport linéaire (26) configurés pour déplacer ledit pré-emballage (105) vers un poste de soudage (25) dans une direction d'alimentation (P),
- des moyens de soudage (30, 31) configurés pour souder lesdites ailettes latérales (110) dans ledit poste de soudage (25) pendant que ledit pré-emballage (105) se déplace dans ladite direction d'alimentation (P),
ladite machine étant **caractérisée en ce que** lesdits moyens de soudage comprennent une première paire de rouleaux de soudage (30) et une seconde paire de rouleaux de soudage (31) disposés d'un côté et de l'autre par rapport audit pré-emballage (105) afin de souder une ailette latérale respective (110), chacune desdites paires de rouleaux de soudage (30, 31) comprenant un rouleau supérieur (30a, 31a) et un rouleau inférieur (30b, 31b) coopérant l'un avec l'autre afin de souder une ailette latérale respective (110), et **en ce qu'**elle comprend également des moyens de génération de vibrations (35) associés à au moins l'un dudit rouleau supérieur (30a, 31a) ou dudit rouleau inférieur (30b, 31b) afin d'amener ledit rouleau (30a, 31a, 30b, 31b) à vibrer radialement, de sorte que lesdites paires de rouleaux de soudage (30, 31) sont aptes à exercer, sur lesdites ailettes latérales (110), une pression variable en fonction de l'épaisseur différente (Sa, Sb, Sc) desdites parties (110a, 110b, 110c).

16. Machine selon la revendication 15, **caractérisée en ce qu'**un mécanisme d'ajustement (40) est associé à au moins un dudit rouleau supérieur (30a, 31a) ou dudit rouleau inférieur (30b, 31b), ce qui permet de modifier la pression de contact entre lesdits rouleaux de soudage (30a, 31a, 30b, 31b).

17. Machine selon la revendication 15 ou 16, **caractérisée en ce que** lesdits moyens de transport linéaire (26) comprennent une bande transporteuse configurée pour déplacer ledit pré-emballage (105) linéairement dans ladite direction d'alimentation (P) qui est parallèle à une direction d'extension longitudinale (X) dudit emballage hermétique (100) dans lequel lesdits articles à fumer (101) sont disposés.

18. Machine selon l'une quelconque des revendications 15 à 17, **caractérisée en ce que** lesdites paires de rouleaux de soudage (30, 31) comprennent une surface active (38) configurée pour interagir avec lesdites ailettes latérales (110), ladite surface active (38) comprenant une pluralité de crêtes et de creux (39) alternant les uns avec les autres.
